# EUROPEAN PATENT SPECIFICATION

(11) **EP 2 274 210 B1**
(45) Date of publication and mention of the grant of the patent: **12.09.2012**
(21) Application number: 08874112.9
(22) Date of filing: 29.12.2008
(51) Int. Cl.: A47J 31/46, A47J 31/36

(54) **AN AUTOMATIC POD CONVEYOR AND BREWER ASSEMBLY FOR FRESH HOT BEVERAGE**
AUTOMATISCHE PAD-FÖRDERVORRICHTUNG UND BRÜHANORDNUNG FÜR FRISCHE HEISSE GETRÄNKE
APPAREIL AUTOMATIQUE DE BRASSAGE ET DE TRANSPORT DE CAPSULES MONODOSE DESTINÉ À PRODUIRE UNE BOISSON CHAUDE FRAÎCHEMENT BRASSÉE

(30) Priority: 28.04.2008 IN KO07792008
(43) Date of publication of application: 19.01.2011
(73) Proprietor: TATA GLOBAL BEVERAGES LIMITED, Kolkata 700020 WB (IN)
(72) Inventor: CHATTERJEE, Ashim, Kolkata 700 019 West Bengal (IN); MANI, George, Kandappali, Pondicherry 605 010 (IN); BALASUBRAMAINIAM, Munusamy, Tamil Nadu (IN)
(74) Representative: Turi, Michael
(86) International application number: PCT/IN2008/000872
(87) International publication number: WO 2009/133570

(56) References cited:
- EP-A1- 1 310 199
- GB-A- 2 205 229
- US-A- 5 028 328
- US-A1- 2004 237 783
- US-B2- 6 820 535
- US-B2- 6 820 535
- US-B2- 6 941 855
- US-B2- 7 051 646
- US-B2- 7 051 646

## Description

### TECHNICAL FIELD

This invention relates to an automatic pod conveyor and brewer assembly for fresh hot beverage wherein the pod conveyor sub-assembly in conjunction with an electronic processor, automatically conveys and precisely positions a single serving pod in the brewer sub-assembly and wherein the brewer sub-assembly in conjunction with a water heating system, automatically brews freshly the brewing material contained in thus conveyed single serving pod using hot pressurized water provided by the water heating system, through the interior of an injection nozzle detachably fixed to the brewer base. Each individual serving of fresh hot beverage thus prepared has consistency in taste and flavor, which is like the hot beverage manually brewed at that instant of time. The brewing, infusible or other material that may be contained in the single serving pod include, without implying any limitation thereto, materials such as tea, coffee, material of plant origin such as floral pieces like jasmine flowers, vegetable pieces like carrots, onions, materials of animal origin such as honey or any other suitable beverage powder or material that can be used in the pod. The brewing by the assembly is fast which makes the assembly specifically, but without implying any limitation thereto, useful for use in offices, ceremonial functions, public meetings, etc where a large number of cups of hot beverage are required in a short period of time.

### BACKGROUND OF THE INVENTION

Automatic or semi-automatic brewing and dispensing machines are known in the art for hot beverages such as tea, coffee, soup and hot chocolate drink, etc. In these machines, the beverage material used is either in loose form or is contained in a container. Some machines use flexible containers such as filter paper bags containing roast and ground coffee or leaf tea. Some machines use single serving cartridges, which may be rigid, semi-rigid or flexible. The main assembly in such machines is the brewing assembly wherein the single serving cartridges are pierced by suitable means provided therein. The hot pressurized water is made to flow into the single serving cartridge which commingles with the brewing material contained in the single serving cartridge and brews the brewing material therein. The brewers have outlet for flow out of thus brewed liquid into a dispensing cup.

In order to enhance the capacity of the brewers for brewing single serving cartridges, magazine tubes are known to be used which stack plurality of single serving cartridges. In such configurations, suitable conveying mechanisms are provided for conveying one single serving cartridge at a time from a magazine tube to the brewer assembly. The plurality of magazine tubes, each magazine tube having plurality of single serving cartridges with same brewing material or each magazine tube stacking single serving cartridges of different brewing material, are known. These magazine tubes are provided on a magazine plate, which is rotatable so that a single serving cartridge having desired brewing material could be positioned or selected and conveyed by the conveying means so that the brewing material may be brewed in the brewer assembly.

US patent No. 6,997,103 discloses a brewing apparatus, which uses a flexible container for brewing material. The brewing material is contained in a sachet, which is sealed with a flexible plastic film on one side, filter paper on other side and has an extension on one side as an outlet for the brewed liquid. There are two clamp members, which can be moved closer to each other to enclose the sachet. One of the clamp members has an elastomeric membrane supported on a hydraulic reservoir whereas the other clamp member has a rigid wall, which is provided with a metallic injector tube projecting outwards. The two rigid spacing elements are provided with means to define recess around the injection tube. Upon closure of the clamps, the hydraulic pressure causes the flexible sheet to bulge outwards against the injector tube resulting in piercing of the film. The water flows into the sachet through the injector tube and the brewed liquid flows out through the extension of the sachet.

A drawback of the above device is that a flap formed by a portion of the flexible film of the sachet forms a valve over the tip of the injector tube which is presumed to be sufficiently flexible that upon injection of the liquid through the injector tube outlet hole, the flap gets displaced to allow the liquid to enter the sachet and when the supply of liquid to injector tube stops, the back pressure of the sachet presses the flap against the outlet hole of the injector tube thereby preventing any of the contents of the sachet from entering and clogging the injector tube. However, the backpressure may not always be sufficient to keep the flap fully and tightly pressed against the outlet hole of injector tube with the result that the clogging of the injector tube with the contents of the sachet may occur after entry of brewing water into the sachet.

Another drawback of the above brewing arrangement is that it is applicable only to flexible containers like a sachet, wherein the plastic film covering the sachet is capable of bulging out on application of hydraulic pressure from one side and being pierced by the injector tube.

Still another drawback of the above brewing arrangement is that it cannot be used for sachets or cartridges formed with rigid or semi-rigid materials.

Further drawback of the above brewing arrangement is that it is not suitable for automatic operation of brewing with plurality of sachets. The arrangement does not include any conveying mechanism for automatically conveying/positioning the sachet from a magazine tube or other such storage means for plurality of sachets to the brewing position. The above mechanism is therefore not suitable for meeting the bulk demand in a short time in offices, ceremonial functions, etc.

Yet further drawback of the above brewing arrangement is that the injector tube may penetrate completely into the sachet and therefore the flexible film may not form the desired valve flap covering the injector outlet hole as assumed in the arrangement, due to imprecise positioning of the sachet in the brewing mechanism, thereby resulting in clogging of the injector tube with sachet contents during the flow out of the brewed liquid.

US patent no.4,846,052 discloses a device for brewing of brewing material contained in a rigid single cartridge. The device comprises an extraction device and a single cartridge holder. The extraction device has an injection element with plurality of holes for injecting hot water into the cartridge. A cartridge is placed in the said cartridge holder beneath the extraction device so that the injection element pierces the cartridge. The hot water flows through the plurality of holes of the injection element into the brewing material contained in the cartridge. The brewed liquid flows out through the filter paper sealing the cartridge and through an outlet of the cartridge holder.

A drawback of the above device is that piercing and water injection is made from one side of the cartridge and the brewed liquid flows out from other side. There may not be uniform wetting of the brewing material contained in the cartridge due to the formation of channels within the brewing material and as such there may not be thorough brewing of the brewing material contained in the cartridge.

Another drawback of the above machine is that it requires complex piercer structure with multiple holes. It also requires the injection element to have a precision angle of point of injection in the range of 20 to 40 degrees in order not to damage the upper dome of the cartridge.

Still another drawback of the above machine is that it requires a very high pressure of 8 to 15 bars which could result in the bursting of the cartridge due to any localized imperfection or weakness during construction in its wall. Additionally the cartridge needs to have a specialized design with thicker material of the wall to withstand such high pressure which adds to the cost and complexity.

Further drawback of the above machine is that it has complex mechanism for releasing the used cartridge.

Still further drawback of the above machine is that the cartridges require a specialized annular edge which is firmly held within the device during extraction through cooperating means. Any misplacement of the cartridge within the device during brewing will result in deformation or bursting of the cartridge. This also necessitates a complex design of the cartridge holding means on the device.

Yet further drawback of the above machine is that it depends upon the internal pressure of the brewed liquid during brewing, for the cover of the cartridge to split open along its weakening line allowing the brewed liquid to flow out. The pressure inside may get reduced due to the brewing material and filter paper or the pressure inside the pod may not always be adequate enough to split open the cover of the cartridge along the weakening line for the brewed liquid to flow out.

Even further drawback of the above device is that it is not suitable for automatic operation as it does not have plurality of cartridges stacked in plurality of magazine tubes and does not have automatic means for positioning or conveying the cartridges within the brewing device. The device is therefore not suitable for meeting the bulk demand in a short time like in offices, ceremonial functions, etc.

US Patent No. 5,325,765 discloses a beverage filter cartridge wherein the cartridge has three elements. The first element is a base with inverted truncated cone shape with bottom closed and top end open. The second element is a filter in the form of an inverted cone containing the brewing material, wherein the cone has higher tapering on sides and less height than the base so that when the filter is housed in the base with sealing engagement at their rims, it forms a chamber between the surface of filter and base so as to receive the outflow of brewed liquid out of the filter cone. Third element is a dome shaped lid of a piercable material. The three element cartridge as above is housed in a housing whose upper part has a penetrator needle to puncture the lid and allow the hot pressurized water to flow into the filter cone through a hole in the penetrator needle and the lower part of the housing has a second penetrator needle for flow out of the brewed liquid.

A drawback of the above device is that it requires multiple piercing means, one to puncture the filter cone lid for allowing the brewing water to flow into the brewing material contained in the filter cone and other to pierce the bottom of the housing to allow the flow out of the brewed liquid into a dispensing cup.

Another drawback of the above device is that it requires specialized cartridges of a complex design which would require specialized machinery to produce.

Yet another drawback of the device is that the piercing means have to puncture the base of the beverage filter cartridge which is made up of material such as polystyrene, polyethylene, etc, which could blunt the tip of the piercing means over a period of time, reducing the efficacy of the mechanism. US patent No. 6,606,938 discloses a single serve brewer, which has a housing containing a liquid storage tank. A shaft extending vertically upwards from the liquid tank has a conical shaped baffle at its lower end and a pivotal arm at its upper end, which extends to the brewing chamber designed to accept a single serve beverage filter cartridge. An air pump on a platform is connected to a bladder and also to a port on the conical baffle via a first flexible hose. A tube extending to tank through the baffle is connected via second flexible hose to a first tubular probe carried by the said arm. A helical spring and a second tubular probe are provided under the brewing chamber.

When the bladder is inflated, it pushes down the pivotal arm and shaft resulting in compressing the spring under the cartridge leading to pressing down and piercing of the bottom of the cartridge by second tubular probe. When the pressure releases, the lid of the container is pierced by the first tubular probe. The compressed air is then fed into the liquid tank via first flexible hose causing a metered amount of hot water from the liquid tank to be expelled and fed into the cartridge via second flexible hose. The beverage thus prepared passes through a filter and through the second tubular probe into the dispensing cup. A drawback of the above device is that the supply of brewing water into the single serving cartridge is by a complex and cumbersome mechanism involving air pump, bladder, two flexible hoses, a shaft, a pivotal arm etc.

Another drawback is that it requires two tubular probes as piercing means, one tubular probe for piercing the container lid and the other tubular probe for the bottom of the cartridge.

Yet another drawback is that it requires a complex mechanism to first puncture the bottom of the cartridge and then puncture the lid of the cartridge in a sequence. This sequential puncturing of the cartridge at both ends results in slower cycle time and the consumer has to wait longer for the cup of beverage.

Still another disadvantage is that it is not suitable for bulk servings as the cartridges need to be manually loaded into the brewing chamber for each cup desired to be made, thereby making it unsuitable for scenarios such as offices, ceremonial functions, etc, where high speed of dispensing is required.

Further drawback of the above device is that the second tubular device is used for piercing the bottom of the cartridge as well as being an outlet for the brewed liquid. This tubular device may get clogged with the brewing material during the flow out of the brewed liquid.

US patent No. 6079315 discloses a beverage filter cartridge holder, which is mounted on a slidable drawer. The system includes an axially moveable lid, which is manipulated by a linkage yoke driven by an electric motor. When the lid moves axially downwards, it causes a downwardly projecting apertured probe to pierce the top of the cartridge to provide an inlet for hot water for brewing. It also causes another hollow piercing member to pierce the bottom surface of the cartridge to provide an exit flow path for the brewed liquid.

A drawback of the above system is that the brewer requires a very complex internal mechanism to receive the cartridges, position it in perfect alignment and effect the puncturing of the cartridge from top and bottom during the brewing process, and ejection of the used cartridge.

Another drawback of the above system is that the cartridge has to be manually loaded within the beverage filter cartridge holder by opening the slidable drawer, which makes the system time consuming to brew a cup of beverage.

Yet another drawback of the above system is not suitable for bulk servings as there is no mechanism for automatic conveying of single serving cartridge in the cartridge holder from a cartridge storage means for plurality of cartridges.

Yet another drawback of the above system is that the lid of the brewing chamber is operated using a complex pinion driven rack, electric motor, vertical tracks, etc. Additionally, the pivotal mounting of the brewing chamber on slidable drawer is of a very complex design and may get misaligned due to repeated and frequent use, in turn causing misalignment of the beverage filter cartridge.

Further drawback of the above system is that it requires multiple piercing means, one for piercing top for inflow of hot water for brewing and another for piercing the bottom surface of the cartridge for outflow of the brewed liquid. This adds to the complexity of the brewer design and manufacturing cost.

US patent no. 7,328,651 discloses four embodiments of a cartridge and a beverage preparation machine. The cartridge comprises an outer member, an inner member and a laminate. The interior of the cartridge is filled with one or more beverage ingredients. In the first version of the cartridge, the outer member is a bowl shaped shell having a curved annular wall, a closed top and an open bottom, which together define a receptacle. At the center of the top, an inwardly directed cylindrical extension with stepped profile is provided. A manifold is formed between annular wall and a coaxial secondary wall, which run around the circumference of the annular wall. Around 20 to 40 slots are provided on the annular wall. At the periphery of the outer member, a cylindrical inlet chamber with closed upper surface is provided. This inlet chamber is in communication with the manifold at 1 to 4 slots. The inner member comprises an annular frame and a downwardly extending cylindrical funnel. A filter paper is placed on the annular frame. The annular frame has outer rim and inner hub, which are joined by equispaced radial spokes. The cylindrical funnel has an outer tube surrounding an inner discharge spout through which the prepared beverage is discharged into a cup. The four variant embodiments of cartridge disclosed in the patent differ in minor constructional changes in elements such as spout discharge, radial spokes, slots on the annular wall, provision of an air inlet, etc.

The beverage preparation machine disclosed in the above patent is adapted to use the cartridges of the above type. It comprises a housing, a water tank, a water heater, a water pump, an air compressor, a control processor, a user interface and a cartridge head. The cartridge head comprises a cartridge holder, cartridge recognition means and inlet and outlet piercers. The water heater heats the water to 20 to 85 degrees Celsius. The inlet piercer is a hollow needle like tube for perforating the laminate and allows water inflow through a water conduit. The outlet piercer is an open-ended cylinder having dimensions larger than the discharge spout.

A drawback of the cartridges used in the above machines is that these are quite complex to manufacture and relatively expensive.

Another drawback of the above machine is that it requires four-stage discharge cycle. In the pre-wet stage, the cartridge is charged with water from the water storage tank by means of water pump. In the next stage of 'pause', the beverage ingredients are allowed to soak in water injected during the pre-wet stage. In the next stage of brewing/mixing, water is passed into the cartridge to produce beverage. In the last stage of 'air purge, the pressurized air is blown through the beverage preparation machine and the beverage cartridge to ensure that all the beverage is dispensed and that flow path is cleared so that is ready for dispensing another beverage. In view of above, the delivery time for beverage by the above machine is longer which is typically between 10 and 120 seconds. As a result, the consumer has to wait a long time before he is able to consume his beverage.

Still another drawback of the machine is that the consumer has to manually place the cartridge in the cartridge holder prior to operating the machine and then manually remove and dispose the used cartridge. This slows down the cycle time and also makes it less user-friendly. In certain scenarios an additional operator may have to be deployed to run the machine, requiring additional manpower expenses.

Yet another drawback of the machine is that the operator has to precisely position the cartridge on the cartridge mount such that the handle of the cartridge is located in an irregularity on the cartridge mount. It is quite possible that the cartridge may be misaligned by an untrained operator or due to human error resulting in imperfect brewing or jamming or damage to the machine, when the cartridge holder is closed by operation of the clamping lever.

Further drawback of the machine is that it has no means for stacking plurality of cartridges and automatically conveying the cartridges for brewing. Due to this, the machine is not suitable for bulk servings in short time that is necessary for meeting demand in offices, ceremonial functions, etc.

US patent No.6,536,332 discloses a brewing assembly of an automatic coffee machine for brewing coffee powder pre-packed in a cartridge. The brewing chamber is formed by two brewing chamber portions- an upper portion and a lower portion. The bottom of the brewing chamber is provided with plurality of perforator members in the shape of inclined knife blades, which are adapted to perforate the backside of the cartridge. The upper brewing chamber portion is provided with an extension member whose shape corresponds to the outer shape of the cartridge. The upper brewing chamber portion is provided with an extension member with a central opening with such diameter that the perforating members would not injure the operating person. When the closure piston abuts against the upper portion, the perforator members penetrate the bottom of the cartridge creating longitudinal slots therein. The brewing water flows through the said central opening and through the slots thus created, into the interior of the cartridge, thereby brewing the coffee powder contained in the cartridge.

A drawback of the above apparatus is that it requires bottom of the cartridge to be provided with slots of dimensions so as to accommodate knife-shaped inclined perforator members. This requires precise positioning of the cartridges so that the slots of the cartridges are in alignment with the position of the inclined arrangement of the knife-shaped perforator members.

Another drawback of the above apparatus is that it is also not suitable for operation with cartridges stacked in plurality of magazine tubes, as there is no conveying mechanism for conveying a cartridge from a magazine tube to the brewer unit. The above device is also therefore not suitable for meeting the bulk demand in a short time like in offices, ceremonial functions, etc.

US patent no. 7,013,797 discloses a capsule magazine unit comprising six cylindrical capsule magazine tubes fitted in a circular arrangement on a round base. Each capsule magazine tube has an opening for capsule removal through which the lowermost of the capsules stacked in the tube, can be pushed out. The patent mentions that use can be made of a mechanism in the espresso machine as known in the art to automatically remove the capsule from the capsule magazine tube, which is made to rotate into a removal position and convey this capsule to a brewing position. In order to avoid unintentional sliding of the lowermost capsule out of the capsule-removal opening, a blocking ring is provided around the capsule magazine unit, which can be lifted up when required by lifting elements provided in the holding device, to allow the positioning of the cartridge in the brewer.

The above patent admits that the conveying of the cartridge from the magazine tube to brewing position and the brewing of the brewing material contained in the cartridge is by mechanisms known in the art. Thus, the above invention relates exclusively to plurality of magazine tubes and only the known conveying means are used.

US patent No. 6,820,535 reports a capsule conveying mechanism comprising a capsule-conveying driving motor with a drive mechanism equipped with a driving disc provided with a driving stud. The lowest capsule in the magazine tube is pushed out by a capsule gripper, then an actuating lever swivel mounted on a rotation bearing, conveys a single serving capsule into the brewing unit. Inside the brewing unit, a spindle mechanism causes a capsule piercer to pierce the upper surface of the single serving capsule and then the pressurized hot brewing water flows into the capsule. When pressure inside the cartridge builds up to a certain level, the membrane forming the base of the cartridge gets pressed against a pyramid profiled plate, thus getting pierced. The brewed liquid flows out through the pores thus created by the piercing and through the draining hole on the plate and then through an outlet of the brewing unit.

A drawback of the above device is that it requires multiple piercing means, a capsule piercer for piercing one side of the capsule for entry of water at high temperature and pressure and a plate having multiple pyramid-profiled points for piercing of the membrane on the other side of the capsule for allowing the brewed liquid to flow out.

Another drawback of the above device is that there is a complex mechanism for conveying of the capsule from the magazine tube to the brewing unit which involves an actuating lever, drive motor, driving disc, driving stud, capsule gripper, and the actuating lever being swivel mounted on a rotation bearing. Similarly, the brewing unit also involves complex mechanism involving spindle piston drive consisting of a drive motor, drive mechanism, drive pin engaging with an outer gear tooth system of a spindle piston, drive gear equipped with inner gear tooth system, and so on. The complexity of the machine and relatively more number of moving components may cause higher operating and maintenance costs, in addition to the machine being more expensive to manufacture.

Still another disadvantage of the above brewing assembly is that the outflow of the brewed liquid occurs through holes in the sealing membrane of the single serving capsule created by multiple pyramid profile plate. The miniscule particles of brewed material may flow out through these holes along with the brewed liquid thereby reducing the quality of the dispensed beverage or blocking the exit tubes that convey the brewed liquid out of the brewing unit.

Further drawback of the above assembly is that the inflow of hot water into the capsule takes place from one side and out flow of brewed liquid occurs from other side of the capsule with the result that the brewing of the brewing material contained in the pod may not be thorough as some of the brewing material particles may not be wetted. Additionally, the arrangement of inflow of water from one side and outflow from the other side results in the design of the assembly being very complex and the brewer unit being bulky.

PCT application PCT/US2005/031604 reports a pod conveying mechanism wherein a pod carousel having plurality of compartments containing pod cartridges, is rotated by a spindle motor whereby the appropriate pod cartridge is dropped into the turret aperture of a turret assembly, with the help of an escapement ratchet operating in conjunction with a solenoid. A turret motor rotates the turret plate towards an injector assembly where a drive motor lowers an injection head whereby the injection nozzle of the injector head penetrates the top seal of the cartridge. The hot pressurized from a heat exchanger flows through the injection nozzle and then through the plurality of apertures provided in the insert enclosing the top end of the pod cartridge. The pressure build up of the incoming water inside the pod cartridge causes a scored area of bottom seal of the pod to open allowing the brewed beverage to flow out through a collection funnel into the dispensing cup.

A drawback of the above mechanism is that the conveying and brewing mechanism, when compared to the present invention, is relatively complex in construction. A spindle motor first rotates the carousel, an escapement ratchet then positions the pod into the aperture on a turret plate where it is pierced by the injection nozzle of the injector assembly.

Another drawback of the above apparatus is that for piercing the foil on the top side of the capsule, there is an injector assembly, which is complex in construction, consisting of an injector head moveable in a vertical plane by a cam system driven by a motor. The cam cooperates with an idler wheel, which pushes a support plate downward whereby the injector head comes in contact with the pod cartridge. This type of design also necessitates detents and limit switches in both the pod carousel as well as turret wheel since their correct positions is critical during their rotation.

Still another drawback of the above apparatus is that the pod cartridge used in the apparatus is relatively complex and therefore more complex to manufacture and relatively more expensive as compared to the pod of simple design used in the present invention. In the above apparatus, the pod cartridge has thermoplastic insert with a plurality of apertures provided at the top of the pod cartridge, the insert being further covered with a foil. The bottom of the pod cartridge is made of a filter paper or a foil with a scored area, which becomes detached when the hot pressurized water gets injected into the pod cartridge. The hot pressurized water enters into the pod cartridge through the apertures in the insert and flows out through the scored area. The complexity of the said pod cartridge and its higher cost result in the increase in the final cost per cup of beverage to the consumers.

Further drawback in the above apparatus is that the water flows into the pod cartridge from the top and flows out through the bottom, which necessitates provision of filter paper with apertures on one side and means for allowing the flow of water from the other side.

Another drawback of the above mechanism is that the design uses an eccentric cam to lower the support plate and the injector head. This cam activated mechanism is generally slow in operation and increases the cycle time per cup.

Yet another drawback of the system is that there is a complex mechanism for lifting the pod cartridge from the turret aperture prior to it being pushed into the disposal bin by the sweeping arm.

GB 2 205 229 discloses a cartridge type beverage brewing apparatus. A dispenser disclosed comprises two sub-systems namely supply system and extracting system. The supply system comprises hoppers for storing stacked cartridges, a cartridge moving mechanism for horizontally moving cartridges one by one from hopper and a waste box for receiving used cartridges. The moving mechanism has a rotary horizontal disc rotatable around support shaft. The periphery of rotary disc is notched at several portions to form plurality of cartridge holding portions.

The extracting system has an extracting mechanism located at extracting position, in that where a cartridge is located between upper extracting head and a lower extracting head, the rotary disc being interposed there between. The upper extracting head is vertically movable above extracting position.

### SUMMARY OF THE INVENTION

The brewer sub-assembly of the present invention, in one embodiment, involves the use of a pneumatic cylinder mounted on a supporting plate with a brewer plunger fitted to the piston rod of the pneumatic cylinder, from underneath the supporting plate through an aligned circular aperture. The pneumatic cylinder is operated by compressed air generated by an air compressor and stored in a compressed air storage tank. The compressed air operates the pneumatic cylinder, which causes upward and downward movement of the brewer plunger within a short cycle time. The downward movement of the brewer plunger results in the downward movement of the single serving pod placed directly below the brewer plunger and over the filter disc holding plate, thereby positioning the single serving pod within the brewer chamber for brewing. During the upward movement of the brewer plunger, after completion of brewing, the used single serving pod is left on the filter disc holding plate, and the used pod is pushed by the pod-conveyor into a disposal bin kept alongside the brewer sub-assembly...Alternate drive means to move brewer plunger downwards could be hydraulic cylinder or electro-mechanical linear actuator..

There is also a simplified mechanism for flow of hot pressurized water into the single serving pod for the purposes of brewing. A single means of an injection nozzle with a conical tip is detachably fixed to the brewer base with the said conical tip protruding upwards, into the brewer chamber, from the brewer base. During the downward movement of the brewer plunger, the single serving pod kept over filter disc holding plate with its porous membrane facing downward, presses against the conical tip of the injection nozzle whereupon porous membrane of the pod gets pierced and then hot pressurized water flowing through the interior of the injection nozzle gets injected into the interior of the pod containing the brewing material for the purposes of brewing. Thus, the single means of injection nozzle performs the multiple functions of piercing the porous membrane of the single serving pod as well as injecting hot pressurized water into the interior of the pod, as against known art which employs multiple piercing means, with one piercing means for entry of hot pressurized water into the pod from one side of the pod and then other piercing means for allowing the brewed liquid to flow out from other side of the pod. The injection nozzle penetrates right up to the top end of the single serving pod and further, the entry and flow-out of water being only from one side of the single serving pod, enables the uniform spreading of hot pressurized water inside the single serving pod thereby brewing every minute particle of the brewing material contained within the single serving pod.

The brewer sub-assembly used in the present invention is substantially airtight during brewing which prevents the escape of aroma and other volatile chemicals during brewing. Such chemicals thus remain dissolved in the brewed liquid and further add to the flavor, taste and aroma of the dispensed hot beverage.

The assembly ensures hygiene by having fully automatic operations with no human intervention and automatic disposal of used pods into the disposal bin

The pod conveyor used in the assembly is novel in construction and is capable of performing the multiple functions including conveying of the single serving pod from the chute to the brewer sub-assembly without having any guide channel, precisely positioning the pod on the filter disc in the brewer sub-assembly and disposing off the used pod into the disposal bin, in conjunction with an electronic processor and the brewer sub-assembly. The pod conveyor, with the help of pusher motor with its motor gear engaged with the pusher gear fixed onto the integral shaft of the pod conveyor, is capable of rotation in anti-clockwise and clockwise direction. During anti-clockwise rotation, the inward contour at the forward end of the pod conveyor aligns with the external contour of the pod, firmly holds the pod within said inward contour, conveys and precisely positions the pod on the filter disc in the brewer sub-assembly and returns by clockwise rotation to a position between brewer sub-assembly and the first chute, till the brewing is completed. During the next anti-clockwise rotation, the pod conveyor disposes off the used pod into the disposal bin and then returns back to its rest/start position behind the first chute if it is not empty, or else behind the second chute.

The assembly includes a sensor placed below the first chute closer to the brewer sub-assembly. The sensor detects the availability of single serving pods in this chute. When it detects that this chute is empty, it gives signal to the electronic processor, which causes the pod conveyor to move behind the second chute and convey pods from this chute to the brewer sub-assembly. A sensor placed beneath the second chute senses when this chute is empty. If so, it sends a signal to the electronic processor which in turn causes the pod conveyor to move to rest/start position behind first chute, causes halting of the brewing process in the brewer sub-assembly till refill of the empty chutes with fresh pods and simultaneously sending a signal to the operator on the electronic display panel (not shown) providing message to the operator to refill the empty chutes with fresh pods. The presence of these sensors thus enhances the capability of the assembly to operate with a higher stock of pods stacked in plurality of chutes. This also eliminates the need for separate motor and associated mechanism for rotation of the base plate on which pod chutes are fitted, as is known in the art.

A non-corrosive and food grade filter disc with fine pores of up to 250 microns each, together with the porous membrane used to cover and seal the brewing material contained in the pods, prevent miniscule particles of the brewing material to flow out along with the brewed liquid during the brewing process, into the dispensing cup, thereby ensuring fine quality of brewed liquid.

The assembly uses minimum mechanical components and simplifies design. It has therefore enhanced reliability, it is easy and economical to manufacture and has relatively lower operating and maintenance costs. Its capability to brew within a short time each individual serving of brewed beverage with consistency in quality and flavor, makes it specifically useful for meeting bulk demand in short time in offices, ceremonial functions, public meetings, etc. The single serving pods used in the assembly have simple structure with no mechanism whatsoever embodied in the interior of the pods as is known in the art, thereby making the single serving pods easy to manufacture at low cost, thus making the cost per dispensed cup also low. The assembly is capable of brewing a wide variety of brewing/infusible materials that can be placed in these pods. The brewing, infusible or other material that may be contained in the single serving pod include, without implying any limitation thereto, materials such as tea, coffee, material of plant origin such as floral pieces like jasmine flowers, vegetable pieces like carrots, onions, materials of animal origin such as honey or any other suitable beverage powder or material that can be used in the pod.

In view of above, therefore an object of the present invention is to provide an automatic pod conveyor and brewer assembly for fresh hot beverage wherein the brewer sub-assembly in conjunction with an electronic processor, automatically brews the brewing material contained in a single serving pod, which has been conveyed by a pod conveyor sub-assembly from a chute and precisely positioned in the brewer sub-assembly.

Another object of the present invention is to provide an assembly wherein each individual single serving of hot beverage prepared by the brewer sub-assembly has perfect consistency in taste and flavor.

Still another object of the present invention is to provide an assembly wherein each individual single serving of hot beverage prepared by the brewer sub-assembly has the taste and flavor like the hot beverage manually freshly prepared at that instant of time and at that location.

Yet another object of the present invention is to provide an assembly wherein the brewer sub-assembly is substantially airtight during brewing which prevents the escape of the volatile chemicals which contribute to the aroma, flavor and taste of the prepared fresh hot beverage. These volatile chemicals remain contained with the brewed liquid, and therefore enhance the flavor, taste and aroma of the dispensed hot beverage.

Still another object of the present invention is to provide an assembly wherein the brewing of the brewing material in the single serving pod is carried out within a short time of 15 to 20 seconds.

Yet another object of the present invention is to provide an assembly wherein hot brewed beverage or hot water infusion or any hot beverage can be prepared with wide variety of brewing, infusible or other material that may be contained in the single serving pod that may include, without implying any limitation thereto, materials such as tea, coffee, material of plant origin such as floral pieces like jasmine flowers, vegetable pieces like carrots, onions, materials of animal origin such as honey or any other suitable beverage powder or material that can be contained in the single serving pod of the present invention.

Further object of the present invention is to provide an assembly wherein a combination of special design of the pod, the optimized temperature and pressure, as well as the rate of flow of hot pressurized water into the pod, enable brewing with high speed, without compromising on the quality of the hot beverage. This makes the assembly specifically suitable for brewing large number of cups in a short period, which is particularly required in places like offices, commercial establishments, ceremonial functions, etc.

Still further object of the present invention is to provide an assembly wherein a uniquely designed pod conveyor, by its clock-wise and anti-clockwise rotational movement on a vertical integral shaft in a substantially horizontal plane, performs multiple functions by securing the pod within its inward contour at its forward end. The multiple functions include conveying the single serving pod from a chute to the brewer sub-assembly without the help of any guide channel, precisely positioning the pod on a filter disc in the brewer sub-assembly and then disposing off the used pod into a disposal bin. The pod-conveyor, therefore, simplifies mechanical design and operations.

Yet further object of the present invention is to provide an assembly wherein just one means namely injection nozzle performs the multiple functions of puncturing the porous membrane of the single serving pod as well as injecting of hot pressurized water for brewing into the pod. This simplifies the complexity of the brewer design.

Even further object of the present invention is to provide an assembly wherein the injection nozzle penetrates up to the top end of the pod kept in inverted position causing the injected hot pressurized water to splash back from the top end of the pod, thereby resulting in the uniform spreading of hot pressurized water inside the pod and brewing every minute particle of the brewing material contained in the pod.

Yet further object of the present invention is to provide an assembly wherein the need for multiple piercing means, one for piercing top surface of the cartridge for entry of brewing water and other for piercing the bottom for flow out of brewed liquid, is obviated, as is known in the art.

Still further object of the present invention is to provide an assembly which uses low cost single serving pods of simple structure as compared to some of the costly pods of complex structure known in the art (which incorporate puncturing or injecting means) and therefore the single serving pods of the present invention are easy to manufacture and are cost-effective thereby making the cost per cup viable for the consumers in the developing markets.

Even further object of the present invention is to provide an assembly for fresh hot beverage, which is hygienic, which does not require any human intervention during the entire brewing process and incorporates an automatic disposal mechanism ensuring spillage-free disposal of the used pods into the disposal bin, after the completion of brewing.

Yet further object of the present invention is to provide an assembly which uses static chutes of simple design, containing stack of inverted single serving pods, thereby minimizing the precision components required for alignment of pods within the chutes and thus reducing the maintenance.

Still further object of the present invention is to provide an assembly which uses a combination of non-corrosive food grade filter disc having fine pores of up to 250 microns, along with porous membrane used on the top of the single serving pod, both of which together prevent miniscule particles of brewing material from flowing along with the brewed liquid into the dispensing cup thereby ensuring superior quality of the dispensed hot beverage.

### BRIEF DESCRIPTION OF DRAWINGS

The invention will now be illustrated with Figures, which are intended to illustrate one of the embodiment in which the present invention may be practiced. The accompanying figures are not intended to be taken restrictively to imply any limitation on the scope of the present invention. Any modifications, adaptations or equivalent changes by the persons skilled in the art employing the principles and functional features of the components/sub-assemblies embodied in the present invention are intended to be within the scope of the present invention which by no means is to be taken to be limited to the particular construction herein disclosed and shown by drawings. In the accompanying Figures:
Fig.1: shows an overall assembly of the automatic pod-conveyor and brewer assembly for fresh hot beverage.
Fig.2: shows the exploded view of the brewer sub-assembly
Fig.3: shows the exploded view of the pod conveyor sub-assembly
Fig. 4(a): shows the pod conveyor in the rest/start position behind the first chute.
Fig. 4(b): shows the alignment of the inward contour of the pod conveyor with the pod and conveying and precisely positioning the pod in the brewer sub-assembly.
Fig.4(c): shows the pod conveyor between the first chute and the brewer sub-assembly waiting for the completion of the brewing.
Fig. 4(d): shows the pod conveyor with inward contour aligned with the used pod at the instant of its disposal into the disposal bin.
Fig.5 (a), 5(b), 5(c): show the construction of three illustrative embodiments of the single serving pod containing brewing material.

### DESCRIPTION OF THE INVENTION w.r.t. DRAWINGS

According to this invention there is provided an automatic pod conveyor and brewer assembly for fresh hot beverage which, in conjunction with an electronic processor, automatically conveys a single serving pod from a chute to brewer sub-assembly where the brewing material contained in the pod is brewed, in a time-efficient manner, by incoming hot pressurized water from a water heating assembly (not shown). The pod conveyor sub-assembly of the present invention and the brewer sub-assembly of the present invention have novel and simplified design with relatively less number of mechanical and moving components as compared to the conveyors and brewer assemblies known in the art. The brewing operation in the brewer sub-assembly is performed by a mechanism involving a pneumatic cylinder, which in conjunction, with an electronic processor and an air compressor, operates a brewer plunger which presses down the pod into the brewer chamber within a very short time, reducing the cycle time required per brew, thus making the assembly specifically useful for meeting bulk demand within short time in places such as offices, commercial establishments, etc.

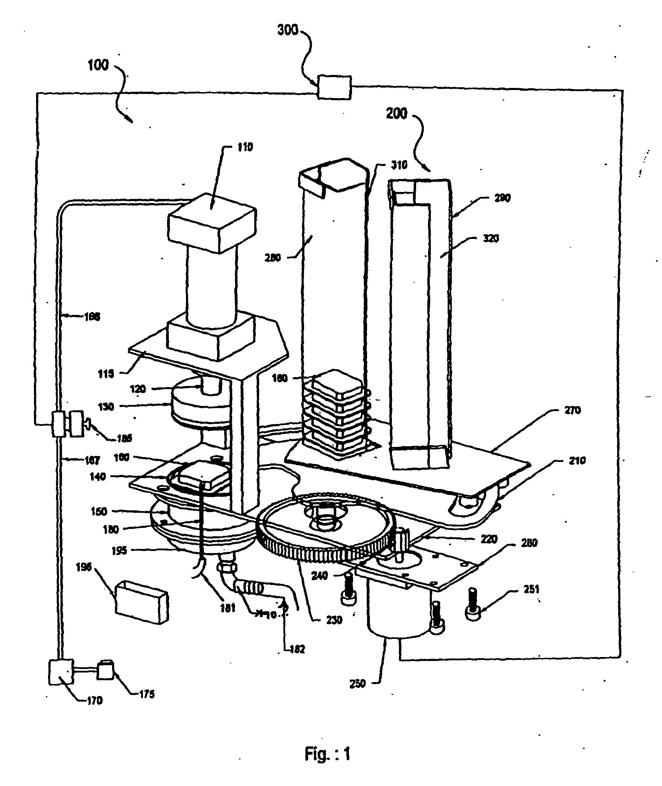

Referring to Fig.1, the automatic pod conveyor and brewer assembly of the present invention comprises of a brewer sub-assembly (100), a pod conveyor sub-assembly (200) and an electronic processor (300).

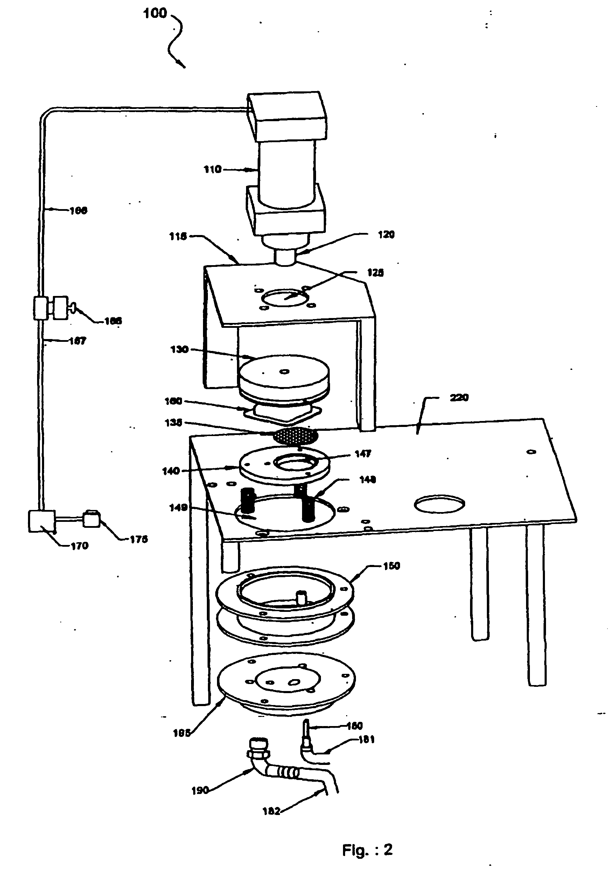

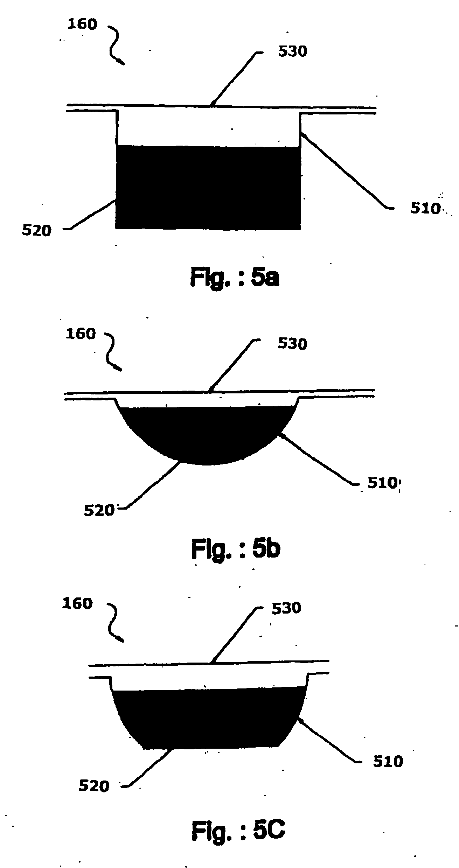

Referring to Fig. 2, the brewer sub-assembly (100) includes a pneumatic cylinder (110) with piston rod (120) mounted on a supporting plate (115) with the said piston rod (120) being fitted through a dimensionally aligned circular aperture (125) on the said supporting plate (115). A brewer plunger (130) is fitted to the piston rod (120) of the said pneumatic cylinder (110) from underneath the said supporting plate (115). A perforated non-corrosive food grade metallic filter disc (135) is placed over a filter disc holding plate (140), which rests on three springs (148) placed between the filter disc holding plate (140) and the brewer chamber (150). The said filter disc (135) has fine pores of up to 250 microns each, which together with the porous membrane (530) (Fig. 5ab, 5b, 5c) covering the single serving pod (160), prevents the miniscule particles of brewing material (520) (Fig. 5a, 5b, 5c) from flowing along with the brewed beverage into the dispensing cup (not shown). The filter disc holding plate (140) is placed through a dimensionally aligned aperture (149) in the base plate (220).

The brewer chamber (150) is fixed underneath the base plate (220) with its top open end aligned to the circular aperture (149) in the base plate (220) and also in alignment with the brewer plunger (130) and filter disc holding plate (140) so that during the upward and downward motion of the piston rod (120) imparted to it by the pneumatic cylinder (110), the brewer plunger (130) along with filter disc holding plate (140) with single serving pod (160) placed over it, is capable of moving to and fro into the body of the brewer chamber (150) in a smooth, tight-fitting and uninterrupted manner. A brewer base (195) is detachably fixed to the bottom of the brewer chamber (150) by appropriate fixing means. An injection nozzle (180) is detachably and conveniently mounted on the brewer base (195) by means of a flange. Due to this, at any point of time, the injection nozzle (180) can be easily detached for the purposes of cleaning or maintenance. A brewed liquor outlet port (190) is provided in the brewer base (195) for the brewed liquid to flow into a dispensing cup (not shown) via a dispensing tube (182), which is made of food grade material.

The pneumatic cylinder (110) is connected to an air solenoid valve (165) through connecting tube (166). The air solenoid valve (165) is in turn connected to compressed air storage tank (170) through the connecting tube (167). An air compressor (175) compresses the air and the air thus compressed by it is stored in the said compressed air storage tank (170). The electronic processor (300) controls the opening and closing of air solenoid valve (165), which allows movement of compressed air from compressed air storage tank (170) to pneumatic cylinder (110) during the brewing process. This mechanism enables speedy operation of the pneumatic cylinder (110), which results in rapid downward movement of the brewer plunger (130) via piston rod (120) into the brewer chamber (150) during brewing process, and subsequent rapid upward movement of the brewer plunger (130) on completion of the brewing process. This design significantly reduces the brewing cycle time per brew.

The said injection nozzle (180) is a hollow tube, preferably metallic and more preferably made of non-corrosive food grade material like stainless steel. The said injection nozzle (180) has a conical tip which punctures the porous membrane (530) (Fig. 5a, 5b, 5c) that covers and seals the contents of the pod (160), when the pod (160) is pressed against the conical tip of the injection nozzle (180) during the downward motion of brewer plunger (130) imparted to it by the piston rod (120). Once the porous membrane (530) (Fig. 5a, 5b, 5c) of the pod (160) is punctured, the conical tip of the injection nozzle (180) directs hot pressurized water flowing through its interior from a hot water sub-assembly (not shown) into the interior of the pod (160), thereby brewing the brewing material (520) (Fig. 5a, 5b, 5c) contained inside the pod (160). The conical tip of the injection nozzle (180) penetrates up to the top end of the pod (160) which is in the inverted position, which results in uniform spread of hot pressurized water within the interior of the pod (160), thereby resulting in brewing of every minute particle of the brewing material (520) (Fig. 5a, 5b, 5c) contained in the single serving pod (160). The injection nozzle (180) preferably has an outer diameter of around 4mm.

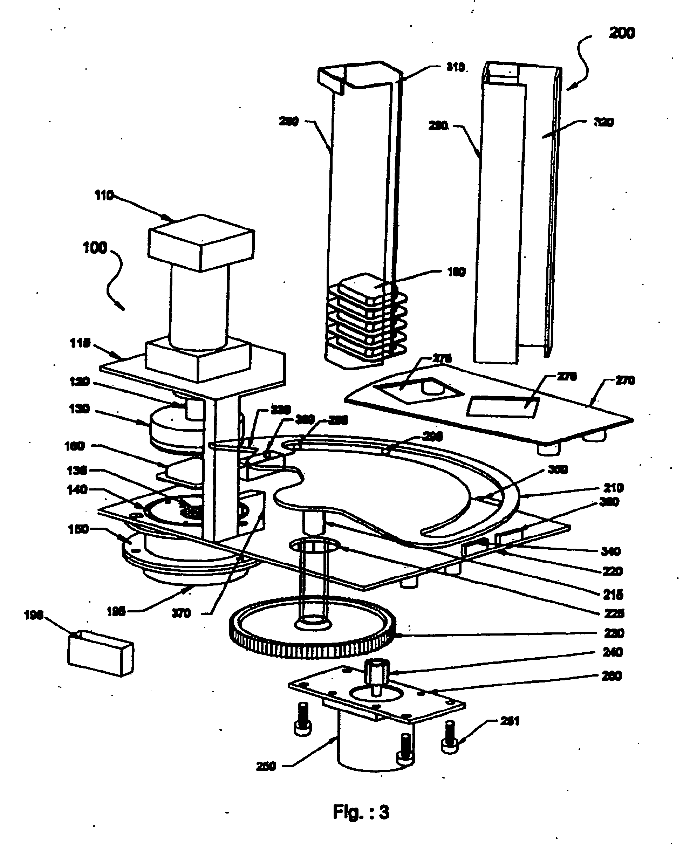

Referring to Fig. 3, the pod conveyor sub-assembly (200) includes a pod conveyor (210), which is rotatable on an integral shaft (215) that is fixed underneath it and located around the middle portion of its front curvilinear contour. The pod conveyor (210) is rotatable on the said integral shaft (215) in clockwise and anti-clockwise direction within the space between a base plate (220) and chute supporting plate (270). The integral shaft (215) is fitted to the pusher gear (230) positioned underneath the base plate (220) through a bush (225) mounted on the base plate (220). The pusher gear (230) is engaged with the motor gear (240) of the pusher motor (250). Due to this, when the motor gear (240) is rotated by the pusher motor (250), it results in the rotation of the pusher gear (230) in the opposite direction. When this happens, it also results in rotation of the pod conveyor (210) in the same direction as the pusher gear (230).

The single serving pods (160) containing the brewing material (520) (Fig. 5a, 5b, 5c) are stacked in an inverted position in the plurality of vertical chutes like chute (280) and chute (290), which are vertical hollow tubes fitted over the upper surface of a chute supporting plate (270). The chutes (280, 290) extend vertically upwards from the dimensionally aligned apertures (275, 276) provided on the chute supporting plate (270). The apertures (275, 276) conform in dimension and shape to the internal dimension and shape of the chutes (280, 290). Chutes (280, 290) have one or more vertical slots (310, 320) extending from top to the bottom, to facilitate loading and stacking of the pods (160) therein. These chutes (280, 290) are designed to hold up to 100 single serving pods (160) each, in an inverted position with porous membrane (530) (Fig.5a, 5b, 5c) facing downwards. It is to be noted that the chutes (280, 290) may have different shapes conforming to the shape of pods (160), which may also vary in shape (like shown in Fig.5 (a), Fig.5 (b) and Fig.5(c)). For example, the chutes (280, 290) may have circular cross-section instead of square cross-section, when the pods (160) are circular in shape, instead of being square in shape. The pods (160) can smoothly move downwards through chutes (280, 290) and through the aligned apertures (275, 276) from where these are conveyed and positioned by the pod conveyor (210) into the brewer sub-assembly (100).

A sensor (295) is fixed on the base plate (220) and underneath the chute (280), which provides signal to the electronic processor (300) (Fig.1) when this chute (280) is empty, i.e. no pods (160) are remaining therein. When the sensor (295) senses that chute (280) is empty, the sensor (295) sends a signal to the electronic processor (300) (Fig.1), which in turn activates pusher motor (250) to cause pod conveyor (210) to rotate in a clockwise direction, which causes moving of the inward contour (330) of the pod conveyor (210) to a position behind chute (290) till it activates limit switch (340) which sends a signal to the electronic processor (300) (Fig. 1) to stop further rotational movement of the pod conveyor (210), by de-activating the pusher motor (250).

A sensor (296) is fixed below the base plate (220) and underneath the chute (290), which provides signal to the electronic processor (300) (Fig.1) when this chute (290) is empty, i.e. no pods (160) are remaining therein. When the sensor (296) senses that chute (290) is empty, the sensor (296) sends a signal to the electronic processor (300) (Fig.1), which in turn activates pusher motor (250) to cause pod-conveyor (210) to rotate in an anti-clockwise direction. This results in rotational movement of the inward contour (330) of the pod-conveyor (210) to a position behind chute (280) till it activates limit switch (380), which sends a signal to electronic processor (300) (Fig.1), which in turn stops further rotational movement of pod conveyor (210) by switching off the power supply to the pusher motor (250). Simultaneously, the electronic processor (300) (Fig.1) also halts (till refill of the empty chutes (280, 290) with fresh pods (160)) the brewing process in the brewer sub-assembly (100) by switching off power supply to the air solenoid valve (165) (Fig.1). It also sends a signal to electronic display panel (not shown) to provide message to the operator to refill the empty chutes (280, 290) with fresh pods (160). Thus sensor (296) prevents brewing within the assembly when chute (280) and chute (290) are both empty. The sensors (295, 296) increase the capability of the assembly to operate with larger number of pods (160) stacked in plurality of static chutes like (280, 290) to meet bulk demand in short time.

It is to be noted that though drawings show an embodiment of the present invention having two chutes (280, 290) fitted to the chute supporting plate (270) over the dimensionally aligned apertures (275, 276), more such chutes (280, 290) conforming to the shape of pods (160), can be provided and fitted to the chute supporting plate (270) by suitably modifying the chute supporting plate (270), pod conveyer (210) and the associated components.

A pusher motor (250) is mounted on a motor plate (260) by suitable fixing means and the motor plate (260) is fixed underneath to the base plate (220) by fixing means such as four bolts (251, 251, 251, 251). The pod conveyor (210) has a curvilinear contour, which is such that it is capable of uninterrupted rotation in a horizontal plane in clock-wise or anti-clockwise direction within the space between the base plate (220) and the chute supporting plate (270). The forward end of the pod conveyor (210) has an inward contour (330), which aligns with the external contour of the pod (160). Due to this, when this forward end of the pod conveyor (210) comes in contact with the pod (160) during anti-clock wise rotation, it aligns with the pod (160) firmly within its inward contour (330), conveys the pod (160) from the chute (280 or 290) to the brewer sub-assembly (100), without any guide channel. The pod conveyor (210) then precisely positions the pod (160) over the filter disc (135) placed on the filter disc holding plate (140) in the brewer sub-assembly (100). The precise positioning of the pod (160) in the brewer sub-assembly (100) is enabled by the limit switch (350) as hereinafter described.

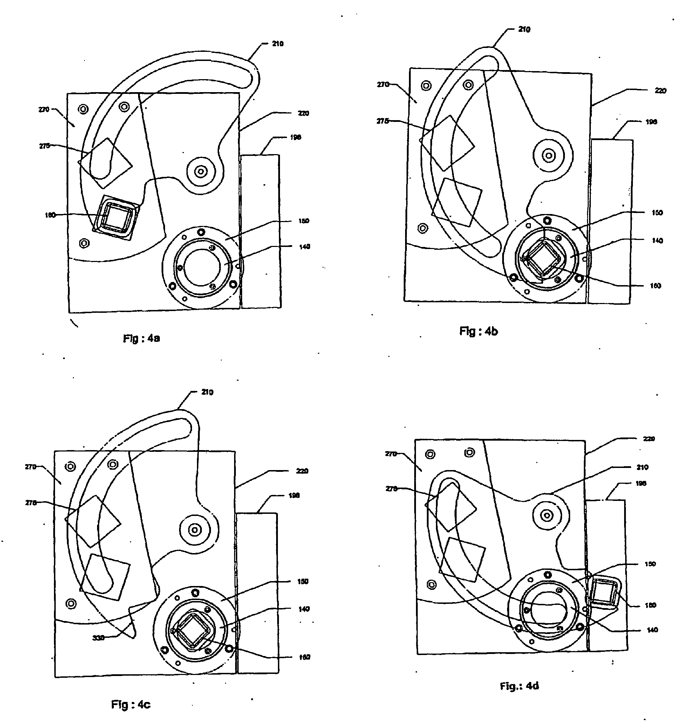

The pod conveyor sub-assembly (200) includes different limit switches (340, 350, 360, 370, 380), which when activated, stop the clockwise or anti-clockwise rotational movement of the pod-conveyor (210) at specific positions by giving signal to electronic processor (300) (Fig.1) which in turn switches off the power supply to the pusher motor (250). The limit switch (350) enables to stop the further anti-clockwise rotation of the pod conveyor (210) after precise positioning of the pod (160) over the filter disc (135) in the brewer sub-assembly (100), as shown in Fig. 4(b). The limit switch (360) enables to stop the clockwise rotation of the pod-conveyor (210) at a position between the chute (280) and the brewer sub-assembly (100) till the brewing of the brewing material (520) (Fig. 5a, 5b, 5c) contained in the pod (160), is completed as shown in Fig. 4 (c). The limit switch (370) enables to stop the second anti-clockwise rotation of the pod conveyor (210) after the used pod (160) has been disposed of by the pod conveyor (210) (as shown in Fig. 4(d)) to a disposal bin (196) placed by the side of the brewer sub-assembly (100). The limit switch (380) enables to stop the second clockwise rotation of the pod-conveyor (210) when the inward contour (330) of the pod-conveyor (210) reaches behind chute (280) (as shown in Fig. 4(a)). The limit switch (340) enables to stop the clockwise rotation of the pod conveyor (210) at a position behind chute (290) when chute (280) is sensed to be empty by the sensor (295). The limit switch (380) enables to stop the anti-clockwise rotation of the pod conveyor (210) after it reaches back to its rest/start position behind chute (280) (as shown in Fig. 4(a)), when chute (290) is also sensed to be empty by the sensor (296).

Referring to Fig. 5(a), 5(b), 5(c), the pod (160) is a receptacle (510) made up of substantially rigid food grade material, containing the brewing material (520) and the open side of the receptacle (510) being covered and sealed with a food grade porous membrane (530) like filter paper. The sealing of the brewing material (520) contained in pod (160) by a food grade porous membrane (530) keeps the brewing material (520) inside the pod (160) in a hygienic manner. The brewing material (520) in the pod (160) is of predetermined quantity, up to 20 grams, preferably in the range of 0.1 to 12 grams, depending upon the nature of the brewing material (520).

It is to be noted that the pod (160) may have various embodiments as shown in Fig. 5(a), Fig. 5(b) and Fig. 5(c). The contents of the pod (160) may be sealed by any porous membrane (530) which could be punctured by the conical tip of the injection nozzle (180) (Fig. 2) when pod (160) is pressed against it during the downward motion of the brewer plunger (130) (Fig.2) imparted to it by piston rod (120) (Fig. 2). The chutes (280, 290) (Fig. 1) also need to be of the shape and dimensions conforming to the shape and dimensions of the pods (160) so that the pods (160) are stackable therein in the inverted position, with one pod (160) stacked over the other and the porous membrane (530) facing downwards. 1

### WORKING

To begin operation of the assembly, the operator loads pods (160) into the chutes (280, 290) with the porous membrane (530) of the pod (160) facing downward and one pod (160) stacked over the other. The vertical slot (310) provided in chute (280) and vertical slot (320) provided in chute (290) help the operator to load and stack the pods (160) in correct alignment within the chutes (280, 290). During this pod loading operation, the pod conveyor (210) is positioned at its rest or start position with its inward contour (330) behind chute (280) as shown in Fig. 4(a). During the loading of chute (280) with pods (160) the lowermost pod (160) contained therein rests on base plate (220) directly in front of and in alignment with the inward contour (330) of pod conveyor (210). During the loading of chute (290) with pods (160), the lowermost pod (160) contained therein rests over the upper surface of the pod-conveyor (210).

In the operation of the assembly, the electronic processor (300) sends a signal to the sensor (295) to check for the stock of pods (160) in the chute (280). In case, chute (280) is not empty i.e. pods (160) are available in this chute (280) as per the loading process described previously, the sensor (295) sends a signal to the electronic processor (300), which in turn activates the pusher motor (250) which then causes the pod conveyor (210) to rotate in an anti-clockwise direction till the pod (160) is conveyed from the chute (280) and is precisely positioned over filter disc (135) as shown in Fig. 4(b). At this precise instant, limit switch (350) gets activated and sends a signal to the electronic processor (300) which in turn switches off the power supply to the pusher motor (250), thereby stopping further anti-clockwise rotation of the pod-conveyor (210). Then the electronic processor (300) gives signal to pusher motor (250) which activates clockwise rotation of the pod conveyor (210) so as to move the pod conveyor (210) away from brewer plunger (130) prior to when the brewer plunger (130) comes down into the brewer chamber (150) for brewing. The limit switch (360) is activated when the inward contour (330) of the pod-conveyor (210) reaches a position between chute (280) and the brewer sub-assembly (100) as shown in Fig.4(c), which then sends a signal to the electronic processor (300) which in turn switches off the power supply to the pusher motor (250), thereby stopping this clockwise rotation of the pod-conveyor (210).

On the other hand, if the sensor (295) returns 'no stock' signal to the electronic processor (300), the electronic processor (300) sends a signal to activate the pusher motor (250), which in turn rotates the pod conveyor (210) in a clock-wise direction till the inward contour (330) of the pod conveyor (210) reaches a position behind chute (290). At this position of the pod conveyor (210), the limit switch (340) is activated which sends a signal to the electronic processor (300), which in turn stops the pusher motor (250), thereby stopping the pod-conveyor (210) at this position. When this happens, and if pod (160) is available within chute (290), the pod (160) contained within chute (290) which was hitherto held in position within chute (290) resting over the upper surface of the pod conveyor (210), drops onto the base plate (220) directly in front of and in alignment with the inward contour (330) of pod conveyor (210). At this position of pod conveyor (210), the electronic processor (300) sends a signal to sensor (296) to check for stock of pods (160) in chute (290). If sensor (296) senses presence of pods (160) in chute (290), with the lowermost pod (160) in the said chute (290) resting over the base plate (220) directly in front of and in alignment with the inward contour (330) of pod conveyor (210), sensor (296) sends a signal to the electronic processor (300) which activates the pusher motor (250), which in turn rotates the pod conveyor (210) in an anti-clockwise direction till pod (160) is conveyed from its position beneath the chute (290) and is precisely positioned over the filter disc (135) in the brewer sub-assembly (100), as shown in Fig. 4(b). At this position, limit switch (350) sends a signal to the electronic processor (300), which in turn stops further rotational movement of the pod-conveyor (210). Then the electronic processor (300) gives signal to pusher motor (250) which activates clockwise rotation of the pod conveyor (210) so as to move the pod conveyor (210) away from brewer plunger (130) prior to when the brewer plunger (130) comes down into the brewer chamber (150) for brewing. When the inward contour (330) of the pod conveyor (210) reaches a position between chute (280) and the brewer sub-assembly (100) as shown in Fig.4 (c), the limit switch (360) sends a signal to the electronic processor (300) which in turn switches off the power supply to the pusher motor (250) thereby stopping further clockwise rotation of the pod conveyor (210).

If the sensor (296) senses that chute (290) is empty, the sensor (296) sends a signal to the electronic processor (300), which in turn activates the pusher motor (250) to cause pod-conveyor (210) to rotate in an anti-clockwise direction. This results in rotational movement of the inward contour (330) of the pod-conveyor (210) to a position behind chute (280), as shown in Fig. 4(a) till it activates limit switch (380), which sends a signal to the electronic processor (300) which in turn stops further rotational movement of pod conveyor (210). Simultaneously, the electronic processor (300) also halts the brewing process in the brewer sub-assembly (100) till refill of the empty chutes (280, 290) with fresh pods (160) by the operator, by switching off power supply to the air solenoid valve (165) and also sends a signal to the electronic display panel (not shown) providing message to the operator to refill chutes (280, 290) with pods (160). Thus sensor (296) prevents brewing within the assembly when chute (280) and chute (290) are both empty.

On automatic conveying of the pod (160) from either of the chutes (280, 290) and after positioning of the pod (160) over the filter disc (135) within the brewer sub-assembly (100), the electronic processor (300) then signals to activate the air solenoid valve (165). This allows the compressed air from the compressed air storage tank (170) to pass through the connecting tube (167) and also through the connecting tube (166) into the pneumatic cylinder (110). The compressed air, which thus enters into the pneumatic cylinder (110), pushes the piston rod (120) downwards, which in turn moves the brewer plunger (130) down into the brewer chamber (150). The pod (160) which is directly below the brewer plunger (130) and over the filter disc holding plate (140) moves downward along with the brewer plunger (130) into the brewer chamber (150) thereby pressing the porous membrane (530) of the inverted pod (160) against the conical tip of the injection nozzle (180) resulting in the puncturing of the porous membrane (530) of the pod (160). After this the electronic processor (300) activates an outlet solenoid valve (not shown) of a water heating sub-assembly (not shown), which enables the hot pressurized water from the said water heating sub-assembly (not shown) to pass through a connecting tube (181) and enter the pod (160) in the brewer chamber (150) through the interior of the injection nozzle (180). The conical tip of the injection nozzle (180) penetrates right up to the top end of the inverted pod (160) thereby enabling splashing back from the top end of the pod and the uniform spreading of the hot pressurized water within the pod (160). The hot pressurized water thus injected into the pod (160) through the injection nozzle (180) brews the brewing material (520) contained in the pod (160) and the brewed liquid is filtered by the porous membrane (530) of the pod (160) and filter disc (135) and then flows into a dispensing cup (not shown) through the dispensing tube (182). After the specified time required for brewing is completed, the electronic processor (300) sends a signal to the outlet solenoid valve (not shown) to close, thereby shutting off the supply of hot pressurized water into the injection nozzle (180).

After specified time required for brewing is completed, the electronic processor (300) then deactivates the air solenoid valve (165), which allows the compressed air inside the pneumatic cylinder (110) to be released, thereby moving the piston rod (120) along with the brewer plunger (130) upward. Concurrent to this upward movement of the brewer plunger (130), the filter disc holding plate (140) along with the filter disc (135) and the used pod (160) lying over the said filter disc (135), move upwards simultaneously until the filter disc holding plate (140) returns to its initial rest position, prior to the brewing process, leaving the used pod (160) on the filter disc (135). The electronic processor (300) then activates the pusher motor (250) so as to cause rotational movement of the pod conveyor (210) in an anti-clockwise direction pushing the used pod (160) from above the filter disc (135) towards the disposal bin (196) placed adjacent to the brewer sub-assembly (100). At the precise position of the inward contour (330) of the pod-conveyor (210) when the used pod (160) falls into the disposal bin (196) (as shown in Fig.4 (d)), the limit switch (370) is activated and sends a signal to the electronic processor (300) which in turn stops further anti-clockwise rotation of pod-conveyor (210) by switching off power supply to pusher motor (250). After this, the electronic processor (300) activates the pusher motor (250) so as to cause rotational movement of the pod conveyor (210) in a clockwise direction. This clockwise rotational movement of the pod conveyor (210) is stopped by the limit switch (380) at the instant when the inward contour (330) of the pod conveyor (210), reaches its rest/start position behind the chute (280) as shown in Fig. 4(a).

The automatic pod conveyor and brewing sub-assembly for fresh hot beverage of the present invention is susceptible to modifications, adaptations and equivalent changes by those skilled in the art. It is to be understood that the principles, functional features of different components/subassemblies as taught by the present invention can be employed by those skilled in the art in numerous variant embodiments by making such adaptations, modifications and equivalent changes. Such variant embodiments are intended to be within the scope of the present invention, which is further set forth under the following claims:

## Claims

1. An automatic pod conveyor and brewer assembly for fresh hot beverage comprising:
(a) a pod conveyor sub-assembly (200) comprising:
a pod-conveyor (210) rotatable in a horizontal plane on an integral shaft (215) within the space between a base plate (220) and a chute supporting plate (270); drive means to impart oscillatory rotational movements to said pod-conveyor; and
plurality of chutes like (280,290) fitted in vertical alignment with apertures (275, 276) over said chute supporting plate;
wherein said pod-conveyor is configured to convey by its oscillatory rotational movement a single serving pod (160) from said chutes to a filter disc (135) over a filter disc holding plate (140) in brewer sub-assembly (100) and to dispose of used single serving pod after brewing into a disposal bin (196);
(b) a brewer sub-assembly (100) comprising:
a brewer chamber (150) having said filter disc holding plate at the upper end and brewer base (195) at the lower end having a liquor outlet port (190), wherein said filter disc holding plate is mounted on plurality of springs (148) through an aligned aperture (149) in said base plate and is capable of uninterrupted movement up and down into the body of said brewer chamber and wherein further said filter disc holding plate has an aperture (147) aligned with said filter disc;
a brewer plunger (130) fitted to means to move it downwards thereby moving said single serving pod kept on said filter disc, down into the body of said brewer chamber; and
an injection nozzle (180) detachably mounted on said brewer base and protruding upwards through its underneath surface and into its body, said injection nozzle being connected to a boiler tank of a water heating system by a connecting tube (181) and being capable of puncturing porous membrane (530) of said single serving pod upon downward movement of said brewer plunger; and
(c) an electronic processor (300).

2. An assembly as claimed in claim 1 wherein the chutes (280, 290) have at least one vertical slot (310, 320) which extends from the top to the bottom of each of said chute.

3. An assembly as claimed in claim 1 wherein said drive means for imparting oscillatory rotational movement to said pod-conveyor is like means comprising a pusher motor (250) provided with motor gear (240) which is engaged with a pusher gear (230), said pusher motor being fixed underneath a motor plate (260) which is fixed underneath said base plate by fixing means such as four bolts (251, 251, 251, 251), said pusher gear being provided underneath said base plate and fitted on to said integral shaft through an aligned bush (225) on said base plate.

4. An assembly as claimed in claim 1 wherein said means in said brewer sub-assembly to press down said brewer plunger is selected from pneumatic cylinder (110), hydraulic cylinder and electromechanical linear actuator.

5. An assembly as claimed in claim 1 which includes sensors (295, 296) provided underneath base plate and beneath chutes (280,290) respectively which detect when said chute is empty and convey the signal to said electronic processor.

6. An assembly as claimed in claim 1 which includes limit switches (340, 350, 360, 370, 380) which when activated are capable of sending a signal to said electronic processor to cut off the power supply to said pusher motor when said pod conveyor is at specific positions during its oscillatory rotational movements.

7. An assembly as claimed in claim 1 wherein said single serving pod comprises a food grade receptacle (510) containing brewing material (520)and sealed with a food grade porous membrane (530) wherein said brewing material includes, without implying any limitation thereto, materials like tea, coffee, material of plant origin such as carrots, jasmine flowers, material of animal origin such as honey or any other beverage powder or material which can be placed in said single serving pod.

8. An assembly as claimed in claim 1 wherein shape and periphery of said single serving pod conforms to the shape and inner periphery of chutes (280, 290).

9. An assembly as claimed in claim 1 wherein said filter disc is made of food grade non-corrosive material and has fine pores of up to 250 microns each.

10. An assembly as claimed in claim 1 wherein said injection nozzle has outer diameter of 4mm and is capable of penetrating up to the top end of said single serving pod kept in said chutes in inverted position with said porous membrane facing downwards.

## Patentansprüche

1. Automatische Kapsel-Förder- und Brühanordnung für frische Heißgetränke umfassend:
(a) eine Kapsel-Förder-Unteranordnung (200), umfassend:
einen Kapsel-Förderer (210), der in einer horizontalen Ebene an einer integralen Welle (215) innerhalb des Raumes zwischen einer Basisplatte (220) und einer Schacht-Halteplatte (270) drehbar ist;
ein Antriebsmittel, das ausgelegt ist, um eine hin- und hergehende Drehbewegungen auf den Kapsel-Förderer weiterzugeben; und mehrere schachtartige Einrichtungen (280, 290), die in vertikaler Ausrichtung mit Öffnungen (275, 276) über der Schacht-Halteplatte eingepasst sind;
wobei der Kapsel-Förderer ausgelegt ist, um über seine hin- und hergehende Drehbewegung eine Einzelportionskapsel (160) von den Schächten zu einer Filterscheibe (135) über einer Filterscheibenhalteplatte (140) in einer BrühUnteranordnung (100) zu fördern und um eine gebrauchte Einzelportionskapsel nach einem Brühvorgang in einen Wegwerfbehälter (196) zu entsorgen;
(b) eine Brühunteranordnung (100) umfassend:
eine Brühkammer (150), die die Filterscheibenhalteplatte an dem oberen Ende umfasst und eine Brühbasis (195) an dem unteren Ende mit einem Flüssigkeitsauslassanschluss (190), wobei die Filterscheibenhalteplatte auf mehreren Federn (148) durch eine ausgerichtete Öffnung (149) in der Basisplatte befestigt ist und ausgelegt ist, für eine ununterbrochene Bewegung nach oben und nach unten in den Körper der Brühkammer und wobei weiter die Filterscheibenhalteplatte eine Öffnung (147) umfasst, die mit der Filterscheibe ausgerichtet ist;
einen Brühkolben (130), der an ein Mittel eingepasst ist, um ihn nach unten zu bewegen, um dadurch eine Einzelportionskapsel, die an der Filterscheibe gehalten ist, nach unten in den Körper der Brühkammer zu bewegen; und
eine Einspritzdüse (180), die entfernbar an der Brühbasis befestigt ist und nach oben durch deren untere Fläche und in deren Körper hervorsteht, wobei die Einspritzdüse mit einem Boilerbehälter von einem Wasserheizsystem über ein Verbindungsrohr (181) verbunden ist und ausgelegt ist, eine poröse Membran (530) der Einzelportionskapsel bei einer nach unten gerichteten Bewegung des Brühkolbens zu durchstechen; und
(c) einen elektronischen Prozessor (300).

2. Anordnung gemäß Anspruch 1, bei der die Schächte (280, 290) wenigstens einen vertikalen Schlitz (310, 320) aufweisen, der sich von der Spitze bis zum Boden von jedem Schacht erstreckt.

3. Anordnung gemäß Anspruch 1, bei der das Antriebsmittel zum Weitergeben einer hin- und hergehenden Drehbewegung auf den Kapsel-Förderer einem Mittel entspricht, das einen Antriebsmotor (250) umfasst, der mit einem Motorgetriebe (240) vorgesehen ist, das in Eingriff steht mit einem Antriebsgetriebe (230), wobei der Antriebsmotor unter einer Motorplatte (260) fixiert ist, die unter der Basisplatte fixiert ist, über ein Fixiermittel wie zum Beispiel vier Bolzen (251, 251, 251, 251), wobei das Antriebsgetriebe unter der Basisplatte vorgesehen ist und an der integralen Welle über eine ausgerichtete Buchse (225) an der Basisplatte eingepasst ist.

4. Anordnung gemäß Anspruch 1, bei der das Mittel in der Brühunteranordnung um den Brühkolben nach unten zu pressen, von einem pneumatischen Zylinder (110), einem hydraulischen Zylinder und einem elektromechanischen Linearantrieb ausgewählt ist.

5. Anordnung gemäß Anspruch 1, die Sensoren (295, 296) umfasst, die unter der Basisplatte und jeweils unter den Schächten (280, 290) vorgesehen ist, die erfassen, wenn der Schacht leer ist und das Signal zu dem elektronischen Prozessor leiten.

6. Anordnung gemäß Anspruch 1, die Begrenzungsschalter (340, 350, 360, 370, 380) umfasst, die ausgelegt sind, wenn sie aktiviert sind, ein Signal zu dem elektronischen Prozessor zu senden, um die Stromversorgung zu dem Antriebsmotor zu unterbrechen, wenn der Kapsel-Förderer sich an spezifischen Positionen während seiner hin- und hergehenden Drehbewegungen befindet.

7. Anordnung gemäß Anspruch 1, bei der eine Einzelportionskapsel eine lebensmittelunbedenkliche Aufnahme (510) umfasst, die ein Brühmaterial (520) enthält und mit einer lebensmittelunbedenklichen porösen Membran (530) versiegelt ist, wobei das Brühmaterial umfasst, ohne dass dies eine Einschränkung darstellt, Materialien wie etwa Tee, Kaffee, Materialien pflanzlichen Ursprungs wie z.B. Karotten, Jasminblüten, Materialien tierischen Ursprungs wie z.B. Honig oder anderes Getränkepulver oder Material umfasst, das in die Einzelportionskapsel eingesetzt werden kann.

8. Anordnung gemäß Anspruch 1, bei der Form und Umfang von der Einzelportionskapsel mit der Form und einem inneren Umfang von den Schächten (280, 290) übereinstimmt.

9. Anordnung gemäß Anspruch 1, bei der die Filterscheibe aus einem lebensmittelunbedenklichen nicht korrosiven Material hergestellt ist und feine Poren von jeweils bis zu 250 µm umfasst.

10. Anordnung gemäß Anspruch 1, bei der die Einspritzdüse einen äußeren Durchmesser von 4 mm umfasst und ausgelegt ist, bis zu dem oberen Ende von der Einzelportionskapsel, die in den Schächten in einer umgekehrten Position mit der porösen Membran nach unten gerichtet gehalten ist, zu durchstechen.

## Revendications

1. Ensemble automatique de brassage et de transport de capsules pour boisson chaude fraîchement brassée comprenant :
(a) un sous-ensemble de transport (200) de capsules comprenant :
un transporteur (210) de capsules pouvant tourner dans un plan horizontal sur un arbre incorporé (215) dans l'espace situé entre une plaque de base (220) et une plaque de support (270) de goulottes ;
un moyen d'entraînement pour transmettre des déplacements rotatifs oscillants audit transporteur de capsules ; et
plusieurs goulottes (280, 290) verticalement alignées sur des ouvertures (275, 276) placées au-dessus de ladite plaque de support de goulottes ;
dans lequel ledit transporteur de capsules est configuré pour transporter, grâce à son déplacement rotatif oscillant, une capsule monodose (160) depuis lesdites goulottes jusqu'à un disque filtrant (135) placé au-dessus d'une plaque de maintien (140) de disque filtrant d'un sous-ensemble de brassage (100) et pour rejeter la capsule monodose usagée après brassage dans un réceptacle à déchets (196) ;
(b) un sous-ensemble de brassage (100) comprenant :
une chambre de brassage (150) possédant ladite plaque de maintien de disque filtrant au niveau de l'extrémité supérieure et une base de brassage (195) au niveau de l'extrémité inférieure dotée d'un orifice de sortie (190) de liquide de brassage, dans lequel ladite plaque de maintien de disque filtrant est montée sur plusieurs ressorts (148) dans une ouverture (149) alignée ménagée dans ladite plaque de base et peut effectuer un déplacement de haut en bas ininterrompu dans le corps de ladite chambre de brassage, et dans lequel ladite plaque de maintien de disque filtrant comporte en outre une ouverture (147) alignée sur ledit disque filtrant ;
un plongeur de brassage (130) solidaire d'un moyen destiné à le faire descendre, faisant ainsi descendre ladite capsule monodose maintenue sur ledit disque filtrant dans le corps de ladite chambre de brassage ; et
une buse d'injection (180) montée amovible sur ladite base de brassage et faisant saillie vers le haut par sa surface inférieure et dans son corps, ladite buse d'injection étant raccordée à un réservoir de chauffe-eau d'un système de chauffage d'eau et un tube de raccordement (181) et pouvant percer une membrane poreuse (530) de ladite capsule monodose lors de ladite descente dudit plongeur de brassage ; et
(c) un processeur électronique (300).

2. Ensemble selon la revendication 1, dans lequel les goulottes (280, 290) possèdent au moins une fente verticale (310, 320) qui s'étend de haut en bas de chaque dite goulotte.

3. Ensemble selon la revendication 1, dans lequel ledit moyen d'entraînement destiné à transmettre un déplacement rotatif oscillant audit transporteur de capsules ressemble à un moyen comprenant un moteur-poussoir (250) doté d'un engrenage moteur (240) qui vient en prise avec un engrenage poussoir (230), ledit moteur-poussoir étant fixé au dessous d'une plaque (260) de moteur qui est fixée au dessous de ladite plaque de base par des moyens de fixation tels que quatre boulons (251, 251, 251, 251), ledit engrenage poussoir étant placé en dessous de ladite plaque de base et installé sur ledit arbre incorporé par l'intermédiaire d'un manchon (225) aligné situé sur ladite plaque de base.

4. Ensemble selon la revendication 1, dans lequel ledit moyen dudit sous-ensemble de brassage servant à abaisser ledit plongeur de brassage est choisi parmi un cylindre pneumatique (110), un cylindre hydraulique et un actionneur linéaire électromécanique.

5. Ensemble selon la revendication 1, qui comprend des capteurs (295, 296) respectivement situés en dessous de la plaque de base et sous les goulottes (280, 290), qui détectent le moment où ladite goulotte est vide et qui envoient le signal audit processeur électronique.

6. Ensemble selon la revendication 1, qui comprend des interrupteurs de fin de course (340, 350, 360, 370, 380) qui, lorsqu'ils sont activés, peuvent envoyer un signal audit processeur électronique afin de couper l'alimentation dudit moteur-poussoir quand ledit transporteur de capsules se trouve dans des positions spécifiques au cours de ses déplacements rotatifs oscillants.

7. Ensemble selon la revendication 1, dans lequel ladite capsule monodose comprend un réceptacle (510) de qualité alimentaire contenant une matière de brassage (520) et scellé par une membrane poreuse (530) de qualité alimentaire, dans lequel ladite matière de brassage comprend, de manière non exhaustive, des matières comme du thé, du café, des substances d'origine végétale telles que les carottes, les fleurs de jasmin, des substances d'origine animale telles que le miel ou toute autre poudre ou matière pour boisson qui peut être placée dans ladite capsule monodose.

8. Ensemble selon la revendication 1, dans lequel la forme et la périphérie de ladite capsule monodose sont conformes à la forme et à la périphérie intérieure des goulottes (280, 290).

9. Ensemble selon la revendication 1, dans lequel ledit disque filtrant se compose d'un matériau non corrosif de qualité alimentaire et possède des pores fins allant jusqu'à 250 microns chacun.

10. Ensemble selon la revendication 1, dans lequel ladite buse d'injection a un diamètre extérieur de 4 mm et peut pénétrer jusqu'à l'extrémité supérieure de ladite capsule monodose maintenue dans lesdites goulottes à l'envers, ladite membrane poreuse étant orientée vers le bas.
